# EUROPÄISCHE PATENTSCHRIFT

(11) **EP 1 452 405 B1**
(45) Veröffentlichungstag und Bekanntmachung des Hinweises auf die Patenterteilung: **28.06.2006**
(21) Anmeldenummer: 03029202.3
(22) Anmeldetag: 18.12.2003
(51) Int. Cl.: B60R 21/20

(54) **Gassackmodul**
Airbag module
Module de sac gonflable

(30) Priorität: 27.02.2003 DE 20303230 U
(43) Veröffentlichungstag der Anmeldung: 01.09.2004
(73) Patentinhaber: TRW Automotive Safety Systems GmbH, 63743 Aschaffenburg (DE)
(72) Erfinder: Helmstetter, Matthias, 63743 Aschaffenburg (DE); Bieber, Udo, 63843 Niedernberg (DE)
(74) Vertreter: Strass, Jürgen

(56) Entgegenhaltungen:
- DE-A- 4 332 080
- US-A- 5 297 813
- US-A- 5 354 093
- US-A1- 2002 149 179

## Beschreibung

Die Erfindung betrifft ein Gassackmodul für ein Fahrzeuginsassen-Rückhaltesystem, wobei das Gassackmodul einen Gasgeneratorträger mit einem Boden und einer Umfangswand, sowie eine Abdeckkappe mit einer sich von einer Vorderwand der Abdeckkappe erstreckenden Seitenwand aufweist, und wobei an dem der Vorderwand abgewandten Rand der Seitenwand Rasthaken angeformt sind.

Eine Abdeckkappe eines Gassackmoduls soll den darunterliegenden Gassack vor seinem Einsatz vor Beschädigungen schützen. Die Abdeckkappe soll einerseits leicht an einem Fahrzeugteil, beispielsweise dem Gasgeneratorträger des Gassackmoduls zu montieren sein, andererseits muß beim Entfalten des Gassacks, wenn die Abdeckkappe, je nach Ausführungsform, entweder aufklappt oder aufreißt, ausgeschlossen sein, daß sich die Abdeckkappe vom Fahrzeugteil löst. Es wurden verschiedene Möglichkeiten zur Befestigung der Abdeckkappe am Gasgeneratorträger vorgeschlagen. Eine Anbindung der Abdeckkappe mittels Nieten, eines Spannbands oder eines sogenannten Konterblechs erfordert zusätzliche Bauteile und Fertigungsschritte, was die Montage aufwendig und teuer macht. Außerdem schränkt der Platzbedarf für diese Befestigungsmittel den Bauraum für den Gasgenerator und den Gassack ein.

Aus der DE-A-198 37 899 ist ein Gassackmodul mit einem Gasgeneratorträger bekannt, der radial nach außen vorstehende Laschen aufweist, die sich im montierten Zustand durch in der Seitenwand der Abdeckkappe des Gassackmoduls vorgesehene Öffnungen hindurcherstrecken und den oberhalb der Öffnungen vorhandenen Rand der Seitenwand umgreifen. Die Anbringung solcher Laschen am Gasgeneratorträger ist aber wiederum unter dem Gesichtspunkt der Bauraumoptimierung ungünstig, da auch bei dieser Lösung der für das Gassackmodul notwendige Bauraum radial vergrößert ist.

Die EP-A-0 832 793 zeigt ein Gassackmodul, bei dem eine Abdeckkappe einen Befestigungssteg mit einer an den Steg arretierten, auslenkbaren Steckzunge aus Federblech aufweist, die sich in eine schlitzartige Öffnung in der Lenkradnabe erstreckt.

Ein Gassackmodul der eingangs genannten Art ist aus der DE-A-43 32 080 bekannt. Bei diesem Modul schnappen die Rasthaken der Abdeckkappe in Öffnungen des Gasgeneratorträgers, die in nachgiebigen Seitenwandabschnitten gebildet sind.

Die US-A-2002/0149179 zeigt ein Gassackmodul, bei dem die Rasthaken der Abdeckkappe Verankerungsstreben hintergreifen, die sich senkrecht vom Boden des Armaturenbretts erstrecken.

Aus der US-A-5 354 093 ist ein Beifahrergassackmodul bekannt, bei dem der Gasgenerator auf einer Trägerplatte ohne seitliche Umfangswand montiert ist. Nachgiebige Rasthaken der Abdeckkappe stützen sich im montierten Zustand auf Rastflächen im Randbereich der Trägerplatte ab.

Die gattungsgemäße Abdeckkappe des in der US-A-5 297 813 gezeigten Gassackmoduls hat sowohl Vorsprünge als auch einen Rasthaken. Während die Vorsprünge in Öffnungen in der Seitenwand des Gasgeneratorträgers einschnappen, hintergreift der Haken das Ende der Seitenwand.

Die Erfindung schafft ein Gassackmodul mit einer Abdeckkappe, die leicht und sicher am Gasgeneratorträger arretiert werden kann, wobei der Bauraum für die Anbindung der Abdeckkappe auf ein Minimum reduziert ist.

Gemäß der Erfindung ist bei einem Gassackmodul der eingangs genannten Art vorgesehen, daß die Rasthaken in entsprechende Rastöffnungen im Boden des Gasgeneratorträgers eingreifen, und daß zur Sicherung der erfindungsgemäß gebildeten Rastverbindung Federelemente an den Boden angeformt sind, die die Rasthaken im montierten Zustand des Gassackmoduls in Position halten. Es ist also keine Schnappverbindung im Bereich der Umfangswand, sondern im Boden des Gasgeneratorträgers vorgesehen. Von einer besonderen Gestaltung der Seitenwand der Abdeckkappe oder der Umfangswand des Gasgeneratorträgers mit seitlich angebrachten Haken oder dergleichen, die eine radiale Bauraumbeschränkung bedeuteten, kann somit abgesehen werden.

Eine besonders kompakte Bauform des erfindungsgemäßen Gassackmoduls ergibt sich dadurch, daß der Außendurchmesser der Seitenwand dem Innendurchmesser der Umfangswand entspricht und die Rastöffnungen im Boden an die Umfangswand angrenzen. Die Lage der Rastöffnungen ermöglicht es, daß die Seitenwand der Abdeckkappe direkt an der Umfangswand des Gasgeneratorträgers anliegen kann, so daß kein ungenutzter Zwischenraum verbleibt.

Eine optimale Abstützung der Abdeckkappe wird dadurch erreicht, daß die Rasthaken nach außen weisen und die von der Vorderwand abgewandte Unterseite der Umfangswand hintergreifen.

Zur Erleichterung der Montage der Abdeckkappe sind die Rasthaken vorzugsweise in radialer Richtung elastisch verformbar.

Vorzugsweise sind die Federelemente in der Montagerichtung der Abdeckkappe elastisch verformbar, um ein Durchführen der Rasthaken durch die Rastöffnungen zu erleichtern.

Ein Zurückbiegen der Rasthaken in radial einwärtiger Richtung wird gemäß einer bevorzugten Ausführungsform dadurch verhindert, daß die Federelemente für eine radial nach außen gerichtete Vorspannung der Rasthaken sorgen.

Weitere Merkmale und Vorteile der Erfindung ergeben sich aus der nachfolgenden Beschreibung und aus den beigefügten Zeichnungen einer bevorzugten Ausführungsform, auf die Bezug genommen wird. In den Zeichnungen zeigen:
- Figur 1 eine geschnittene Seitenansicht eines erfindungsgemäßen Gassackmoduls und eines Lenkradskeletts; und
- Figur 2 eine Schnittansicht entlang der Linie A-A in Figur 1.

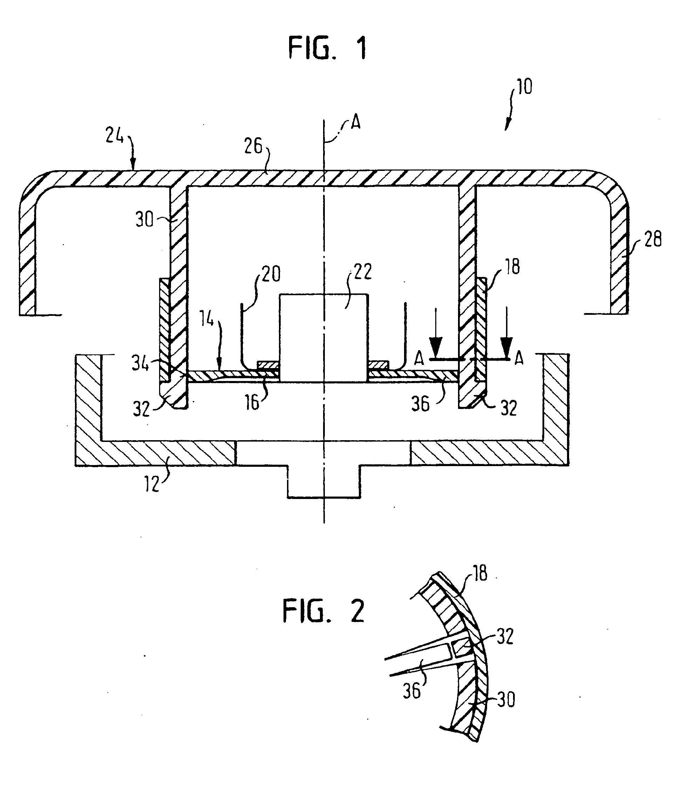

In Figur 1 ist ein Fahrergassackmodul 10 dargestellt, das an einem Lenkradskelett 12 befestigt wird. Das Gassackmodul 10 umfaßt einen Gasgeneratorträger 14 aus Kunststoff mit einem, bezogen auf die Mittelachse A des Gassackmoduls 10, senkrechten Boden 16 und einer sich vom Außenrand des Bodens in Axialrichtung erstreckenden Umfangswand 18. Der Boden 16 und die Umfangswand 18 des Gasgeneratorträgers 14 definieren einen Innenraum, in dem ein (nur schematisch angedeuteter) Gassack 20 und ein Gasgenerator 22 angeordnet sind, welcher am Boden 16 befestigt ist. Das Gassackmodul 10 ist durch eine Abdeckkappe 24 verschlossen, die am Gasgeneratorträger 14 über einen nachfolgend genauer beschriebenen Rastmechanismus arretiert ist.

Die Abdeckkappe 24 weist eine Vorderwand 26 mit einem abgewinkelten Rand 28 auf. Von der Vorderwand 26 erstreckt sich rechtwinklig eine umlaufende Seitenwand 30, deren Außendurchmesser dem Innendurchmesser der Umfangswand 18 des Gasgeneratorträgers 14 entspricht. An dem der Vorderwand 26 abgewandten Rand der Seitenwand 30 sind an mehreren Stellen radial nach außen weisende hakenförmige Fortsätze angeformt, die einstückig mit der Seitenwand 30 ausgebildet sind und im folgenden als Rasthaken 32 bezeichnet werden. Die Rasthaken 32 sind zur Erleichterung der Montage, die weiter unten beschrieben wird, in radialer Richtung elastisch verformbar. Im Boden 16 des Gasgeneratorträgers 14 sind entsprechende, an die Umfangswand 18 angrenzende Rastöffnungen 34 vorgesehen, durch die die Rasthaken 32 durchgeführt sind. Wie in Figur 1 gezeigt, hintergreifen die Rasthaken 32 im montierten Zustand des Gassackmoduls 10 die von der Vorderwand 26 abgewandte Unterseite der Umfangswand 18.

Die Sicherung der Rastverbindung erfolgt, wie in Figur 2 zu erkennen ist, über Federelemente 36, die an den Boden 16 des Gasgeneratorträgers 14 angeformt sind. Beim Aufsetzen der Abdeckkappe 24 auf den Gasgeneratorträger 14 geben die in axialer Richtung elastisch verformbaren Federelemente 36 nach, so daß die leicht nach innen gebogenen Rasthaken 32 durch die Öffnungen 34 durchgeführt werden können. Nach dem Einrasten der Rasthaken 32 sorgen die Federelemente 36 für eine radial nach außen gerichtete Vorspannung der Rasthaken 32, so daß die Rasthaken 32 in Position gehalten werden. (Nur zur Verdeutlichung ist in Figur 2 die Federelemente 36 beabstandet vom Abschnitt der Seitenwand 30 dargestellt, an den der Rasthaken 32 angeformt ist. Tatsächlich liegt das Federelement 36 unter Druck an diesem Abschnitt an.) Ein durch Erschütterungen oder dergleichen bedingtes Aushaken der Rasthaken 32 aus den Rastöffnungen 34 wird auf diese Weise verhindert.

## Patentansprüche

1. Gassackmodul für ein Fahrzeuginsassen-Rückhaltesystem, wobei das Gassackmodul (10) einen Gasgeneratorträger (14) mit einem Boden (16) und einer Umfangswand (18), sowie eine Abdeckkappe (24) mit einer sich von einer Vorderwand (26) der Abdeckkappe (24) erstreckenden Seitenwand (30) aufweist, und wobei an dem der Vorderwand (26) abgewandten Rand der Seitenwand (30) Rasthaken (32) angeformt sind, **dadurch gekennzeichnet, daß** die Rasthaken (32) in entsprechende Rastöffnungen (34) im Boden (16) des Gasgeneratorträgers (14) eingreifen, und daß an den Boden (16) Federelemente (36) angeformt sind, die die Rasthaken (32) im montierten Zustand des Gassackmoduls (10) in Position halten.

2. Gassackmodul nach Anspruch 1, **dadurch gekennzeichnet, daß** der Außendurchmesser der Seitenwand (30) dem Innendurchmesser der Umfangswand (18) entspricht und die Rastöffnungen (34) im Boden (16) an die Umfangswand (18) angrenzen.

3. Gassackmodul nach Anspruch 2, **dadurch gekennzeichnet, daß** die Rasthaken (32) nach außen weisen und die von der Vorderwand (26) abgewandte Unterseite der Umfangswand (18) hintergreifen.

4. Gassackmodul nach einem der vorhergehenden Ansprüche, **dadurch gekennzeichnet, daß** die Rasthaken (32) in radialer Richtung elastisch verformbar sind.

5. Gassackmodul nach einem der vorhergehenden Ansprüche, **dadurch gekennzeichnet, daß** die Federelemente (36) in der Montagerichtung der Abdeckkappe (24) elastisch verformbar sind.

6. Gassackmodul nach einem der vorhergehenden Ansprüche, **dadurch gekennzeichnet, daß** die Federelemente (36) für eine radial nach außen gerichtete Vorspannung der Rasthaken (32) sorgen.

7. Gassackmodul nach einem der vorhergehenden Ansprüche, **dadurch gekennzeichnet, daß** der Gasgeneratorträger (14) aus Kunststoff besteht.

## Claims

1. A gas bag module for a vehicle occupant restraint system, the gas bag module (10) including a gas generator carrier (14) having a base (16) and a peripheral wall (18), and including a covering cap (24) having a side wall (30) extending from a front wall (26) of the covering cap (24), and detent hooks (32) being formed integrally with the edge of the side wall (30) facing away from the front wall (26), **characterized in that** the detent hooks (32) engage into corresponding detent openings (34) in the base (16) of the gas generator carrier (14), and that spring elements (36) are formed integrally with the base (16) which hold the detent hooks (32) in position in the installed state of the gas bag module (10).

2. The gas bag module according to claim 1, **characterized in that** the external diameter of the side wall (30) corresponds to the internal diameter of the peripheral wall (18) and the detent openings (34) in the base (16) adjoin the peripheral wall (18).

3. The gas bag module according to claim 2, **characterized in that** the detent hooks (32) point outwards and engage behind the underside of the peripheral wall (18) facing away from the front wall (26).

4. The gas bag module according to any of the preceding claims, **characterized in that** the detent hooks (32) are elastically deformable in the radial direction.

5. The gas bag module according to any of the preceding claims, **characterized in that** the spring elements (36) are elastically deformable in the installation direction of the covering cap (24).

6. The gas bag module according to any of the preceding claims, **characterized in that** the spring elements (36) provide for a radially outwardly directed prestressing of the detent hooks (32).

7. The gas bag module according to any of the preceding claims, **characterized in that** the gas generator carrier (14) consists of plastic.

## Revendications

1. Module de coussin à gaz pour un système de retenue de passager de véhicule, le module de coussin à gaz (10) présentant un support de générateur de gaz (14) avec un fond (16) et une paroi périphérique (18), ainsi qu'un couvercle (24) avec une paroi latérale (30) s'étendant depuis une paroi antérieure (26) du couvercle (24), et des crochets d'enclenchement étant moulés sur le bord de la paroi latérale (30) qui est détourné de la paroi antérieure (26), **caractérisé en ce que** les crochets d'enclenchement (32) s'engagent dans des ouvertures d'enclenchement (34) correspondantes dans le fond (16) du support de générateur de gaz (14), et **en ce que** sur le fond (16) sont moulés des éléments à effet de ressort (36) qui maintiennent en position les crochets d'enclenchement (32) à l'état de montage du module de coussin à gaz (10).

2. Module de coussin à gaz selon la revendication 1, **caractérisé en ce que** le diamètre extérieur de la paroi latérale (30) correspond au diamètre intérieur de la paroi périphérique (18) et les ouvertures d'enclenchement (34) dans le fond (16) sont adjacentes à la paroi périphérique (18).

3. Module de coussin à gaz selon la revendication 2, **caractérisé en ce que** les crochets d'enclenchement (32) sont tournés vers l'extérieure et s'engagent par l'arrière sur la face inférieure détournée de la paroi antérieure (26), de la paroi périphérique (18).

4. Module de coussin à gaz selon l'une des revendications précédentes, **caractérisé en ce que** les crochets d'enclenchement (32) sont élastiquement déformables en direction radiale.

5. Module de coussin à gaz selon l'une des revendications précédentes, **caractérisé en ce que** les éléments à effet de ressort (36) sont élastiquement déformables en direction de montage du couvercle (24).

6. Module de coussin à gaz selon l'une des revendications précédentes, **caractérisé en ce que** les éléments à effet de ressort (36) assurent une précontrainte des crochets d'enclenchement (32), qui est dirigée radialement vers l'extérieur.

7. Module de coussin à gaz selon l'une des revendications précédentes, **caractérisé en ce que** le support de générateur de gaz (14) est en matière plastique.
